# EUROPÄISCHE PATENTSCHRIFT

(11) **EP 3 278 172 B1**
(45) Veröffentlichungstag und Bekanntmachung des Hinweises auf die Patenterteilung: **27.02.2019**
(21) Anmeldenummer: 16715998.7
(22) Anmeldetag: 30.03.2016
(51) Int. Cl.: G02C 5/12

(54) **BRILLE MIT VERSTELLBARER NASENABSTÜTZUNG**
EYEWEAR WITH ADJUSTABLE NOSEPADS
LUNETTES AVEC PLAQUETTES AJUSTABLES

(30) Priorität: 31.03.2015 AT 502542015
(43) Veröffentlichungstag der Anmeldung: 07.02.2018
(73) Patentinhaber: Silhouette International Schmied AG, 4020 Linz (AT)
(72) Erfinder: SPINDELBALKER, Rupert, 4048 Puchenau (AT)
(74) Vertreter: Patentanwaltskanzlei Hübscher
(86) Internationale Anmeldenummer: PCT/AT2016/050083
(87) Internationale Veröffentlichungsnummer: WO 2016/154653

(56) Entgegenhaltungen:
- DE-U1-202006 011 270
- US-A1- 2008 170 200
- US-A1- 2009 021 691
- US-A1- 2015 049 298

## Beschreibung

### Technisches Gebiet

Die Erfindung bezieht sich auf eine Brille mit einer Fassung für Brillengläser und mit einer verstellbaren Nasenabstützung, deren beide gegebenenfalls durch einen Bügel miteinander verbundene Nasenauflagen in an einem Fassungsabschnitt vorgesehenen Anlenklagern mithilfe je eines Trägers schwenkverstellbar gehalten sind, der einen aus den Nasenauflagen vorstehenden, in eine Aufnahmeaussparung der Fassungsabschnitte eingreifenden Steg mit einer in Längsrichtung des Fassungsabschnitts verlaufenden Anlenkachse umfasst, die radial in eine Lagerausnehmung am Grund der Aufnahmeaussparung schnappverschlussartig eingreift, wobei die Träger mit einer Rasteinrichtung zur Sicherung ihrer Schwenklage versehen sind.

### Stand der Technik

Zur Anpassung einer Brille an die Breite des Nasenrückens eines Brillenträgers ist es bekannt (US 2009/0021691 A1), eine Nasenabstützung mit zwei durch einen Bügel miteinander verbundenen Nasenauflagen aus einem weichen Kunststoff vorzusehen, die gegenüber einem zugehörigen Abschnitt der Glasfassung im Nasenbereich schwenkverstellbar gelagert sind. Zu diesem Zweck sind die beiden Nasenauflagen auf Trägern vorgesehen, die eine Lagerausnehmung zur schnappverschlussartigen Aufnahme von Anlenkachsen auf einander bezüglich der Nase gegenüberliegenden Fassungsabschnitten bilden. Da die Träger der Nasenauflagen eine ausreichende Festigkeit für die Lagerung der weichen Nasenauflagen besitzen und in der Lagerausnehmung Rastausnehmungen aufweisen, können die Nasenauflagen um die in Richtung der zugehörigen Fassungsabschnitte verlaufenden Anlenkachsen verschwenkt werden, die eine mit den Rastausnehmungen in der Lagerausnehmung der Träger zusammenwirkende Rast formen, sodass die Nasenauflagen in den einzelnen Schwenkstellungen durch entsprechende Rasteingriffe gesichert werden können. Nachteilig ist allerdings, dass die zwischen dem nasenseitigen Fassungsabschnitten und den Nasenflanken verlaufenden Anlenkachsen den möglichen Anpassungsbereich beschränken.

Bei Brillen mit einem Gestell, das lediglich zwei durch einen Nasensteg miteinander verbundene Fassungsabschnitte für die Gläser aufweist, ist es bekannt (US 2008/0170200 A1), am Nasensteg einen Halter für eine Nasenabstützung vorzusehen, der zwei beidseits des Nasenrückens verlaufende, gegen die Nasenflanken vorstehende Schenkel zur Aufnahme von weichen Nasenauflagen bildet. Diese Schenkel sind mit einer Aufnahmenut für die Anlenkachsen der durch einen Bügel miteinander verbundenen Nasenauflagen versehen, sodass die an härteren Trägern der Nasenauflagen vorgesehenen, gegenüber den weicheren Nasenauflagen vorstehenden Anlenkachsen in axialer Richtung in die Aufnahmenuten eingeschoben werden können, die auf der vom Nasensteg abgewandten Seite stirnseitig offen ausgebildet sind. Nachteilig ist wiederum, dass aufgrund der gegen die Nasenflanken vorstehenden Schenkel des Halters die gegen die Nasenflanken hin verlagerten Schwenkachsen für die Nasenauflagen den Anpassungsbereich der Nasenabstützung beeinträchtigen. Außerdem ist die Verrastung der jeweiligen Schwenkstellung der Nasenauflagen durch eine in Rastrillen am Grund der Aufnahmenut eingreifende Rastrippe der Anlenkachsen wegen des begrenzten Raumangebots mangelhaft.

Darüber hinaus ist es bekannt (US 2015/0049298 A1), das Anlenklager für die Träger der Nasenauflagen in Fassungsabschnitte eines Nasenbügels zu verlegen, der zu diesem Zweck am Grunde von Aufnahmeaussparungen für den Träger Lagerausnehmungen für Anlenkachsen aufweist, die durch beidseitig vorstehende Achsstummel eines über die Nasenauflagen vorstehenden Stegs des Trägers gebildet werden. Diese Achsstummel greifen in stirnseitige Lageröffnungen der Aufnahmeaussparungen ein, wobei eine dieser beiden Lageröffnungen als umfangsseitig geschlossenes Sackloch und die andere als umfangsseitig offene Achsaufnahme ausgebildet sind, sodass die Träger zunächst mit dem einen Achsstummel in das Sackloch eingesteckt werden müssen, bevor der Steg des Trägers in die seitlich offene Aufnahmeaussparung eingeschwenkt und der andere Achsstummel schnappverschlussartig in die umfangsseitig offene Achsaufnahme in radialer Richtung eingedrückt werden kann. Zur Sicherung der Schwenklage der Träger sind deren Stege an den Stirnseiten mit einem vorstehenden Rastansatz versehen, der mit Rastausnehmungen in den Stirnseiten der die Stege aufnehmenden Aufnahmeaussparungen zusammenwirkt. Nachteilig ist allerdings, dass durch die seitlich offenen Aufnahmeaussparungen nicht nur die Gefahr besteht, dass die Träger für die Nasenauflagen unbeabsichtigt seitlich aus der Aufnahmeaussparung ausgeschwenkt werden, sondern auch die die Nasenauflagen tragenden Fassungsabschnitte erheblich geschwächt werden, sodass von einem ausreichend dimensionierten Fassungsquerschnitt ausgegangen werden muss, der den Einsatz dieser bekannten Konstruktion im Wesentlichen auf Brillen mit einer Sichtscheibe beschränkt, auf die im Bereich der Nasenausnehmung ein entsprechender Nasenbügel aufgesteckt wird.

### Darstellung der Erfindung

Der Erfindung liegt somit die Aufgabe zugrunde, die Nasenabstützung einer Brille so auszugestalten, dass mit einfachen Konstruktionsmaßnahmen unter Wahrung einer ausreichenden Festigkeit der Brillenfassung eine vergleichsweise weite Anpassung der Nasenauflagen an die jeweilige Nasenform eines Brillenträgers sichergestellt werden kann, ohne auf eine gute Verrastung der jeweils gewählten Stellung der Nasenauflagen verzichten zu müssen.

Ausgehend von einer Brille der eingangs geschilderten Art löst die Erfindung die gestellte Aufgabe dadurch, dass die Aufnahmeaussparungen der Fassungsabschnitte als sich im Querschnitt keilförmig verjüngende Aufnahmenuten für den Steg der Träger mit einem die Lagerausnehmung formenden Nutgrund ausgebildet sind und dass die Träger die Aufnahmenut zumindest an einem Ende mit einem Ansatz übergreifen, der mit einer mit wenigstens einer Gegenrast der Fassungsabschnitte zusammenwirkenden Rast als Rasteinrichtung versehen ist.

Durch die Maßnahme, die Lagerausnehmungen in den Nutgrund von Aufnahmenuten der Fassungsabschnitte selbst zu verlegen, wird zunächst sichergestellt, dass die Schwenkachsen zur Verstellung der Nasenauflagen nahe an den Rand der Brillengläser mit der Wirkung verlagert werden können, dass ein Verschwenken der Nasenauflagen in einem vergleichsweise kleinen, durch den keilförmigen Querschnitt der Aufnahmenut vorgegebenen Winkelbereich einen weiten Anpassungsbereich eröffnet, weil eben die Anlenkachsen aus dem Flankenbereich der Nase gegen den Nasenrücken hin verlagert werden. Trotz der in den jeweiligen Fassungsabschnitt verlagerten Lagerausnehmungen für die Anlenkachsen wird eine betriebssichere Verrastung der jeweiligen Schwenkstellung der Nasenauflagen gewährleistet, wenn diese Verrastung nicht in der Aufnahmenut vorgesehen wird. Dies kann in einfacher Weise dadurch sichergestellt werden, dass die Träger für die Nasenauflagen die Aufnahmenuten zumindest an einem Ende mit einem Ansatz übergreifen, der eine Rast bildet, die mit wenigstens einer Gegenrast der Fassungsabschnitte zusammenwirkt. Für eine solche Gegenrast ist im Anschluss an die Aufnahmenut auf dem jeweiligen Fassungsabschnitt ausreichend Platz, verlaufen doch die Aufnahmenuten in Längsrichtung der Fassungsabschnitte. Gleiches gilt für die den Nasenauflagen zugehörigen Rasten, weil die sie bildenden Ansätze der Träger für die Nasenauflagen ausreichend dimensioniert werden kann, ohne die Funktion der Nasenabstützung oder ihre Anpassungsfähigkeit zu beinträchtigen. Dazu kommt, dass durch die sich verjüngende Aufnahmenut die Festigkeit der Fassungsabschnitte im Vergleich zu seitlich offenen Aufnahmeaussparungen für die Stege der Träger nur geringfügig geschwächt werden und ein seitliches Lösen der Nasenauflagen ausgeschlossen ist.

Besonders einfache Konstruktionsverhältnisse ergeben sich, wenn die Gegenrast der Fassungsabschnitte einen in Längsrichtung an die Aufnahmenut anschließenden, in der axialen Mittelebene der Aufnahmenut liegenden Rastwulst bildet. In diesem Fall kommt die den Trägern zugehörige, vorzugsweise ebenfalls wulstförmige Rast in den Raststellungen jeweils auf einer Seite des Rastwulstes der Fassungsabschnitte zu liegen, wobei eine entsprechende Verlagerungsmöglichkeit der Träger der Nasenauflagen in der Aufnahmenut radial zur Lagerausnehmung das Überwinden der Gegenrast erleichtert, sodass diesbezüglich keine besondere Rücksicht auf die elastischen Eigenschaften der Fassung und der Träger der Nasenauflagen genommen werden muss.

Mit dem Vorsehen einer Rast und einer Gegenrast werden zwar einfache, robuste Konstruktionsbedingungen ermöglicht, doch wird damit die Anpassung der Nasenabstützung auf zwei Schwenkstellungen der Nasenauflagen beschränkt, was im Allgemeinen ausreicht. Damit der Anpassungsbereich im Bedarfsfall erweitert werden kann, ohne die durch das Vorsehen von Rast und Gegenrast bestimmte einfache Konstruktion verlassen zu müssen, können die beiden Nasenauflagen ihre Träger auf den einander zugekehrten und voneinander abgekehrten Seiten mit einer unterschiedlichen Dicke überdecken. Aufgrund der dadurch bedingten Asymmetrie der Nasenauflagen wird es möglich, die Nasenauflagen entweder mit der dünneren oder der dickeren Überdeckung der Träger der Nase zuzukehren, womit die gewünschte zusätzliche Anpassung erreicht wird, weil die Lage der Schwenkachsen unveränderbar konstruktiv festgelegt ist.

### Kurze Beschreibung der Zeichnung

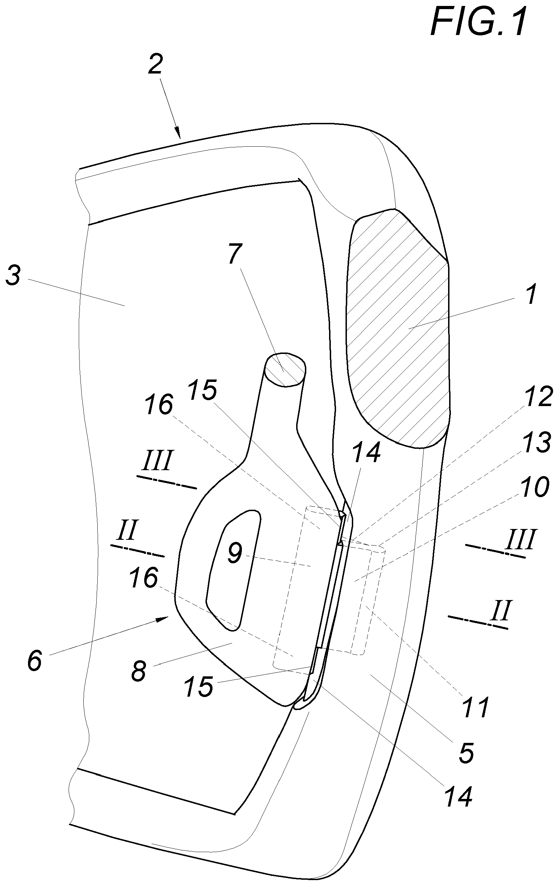

In der Zeichnung ist der Erfindungsgegenstand beispielsweise dargestellt. Es zeigen
- Fig. 1: eine erfindungsgemäße Brille in einem Schnitt durch den die Fassungen der beiden Brillengläser verbindenden Nasensteg,
- Fig. 2: einen Schnitt nach der Linie II-II der Fig. 1 ohne Brillenglas und
- Fig. 3: einen Schnitt nach der Linie III-III der Fig. 1 ebenfalls ohne Brillenglas.

### Weg zur Ausführung der Erfindung

Die dargestellte Brille weist zwei durch einen Nasensteg 1 miteinander verbundene Fassungen 2 für Brillengläser 3 auf, die in Fassungsnuten 4 gehalten sind. Im Bereich der vom Nasensteg 1 ausgehenden, im Bereich der Nasenflanken verlaufenden Fassungsabschnitte 5 der Fassungen 2 ist eine Nasenabstützung 6 vorgesehen, die zwei durch einen sich über den Nasenrücken erstreckenden Bügel 7 verbundene Nasenauflagen 8 aufweist. Dieser Bügel 7 ist vorteilhaft, aber keineswegs zwingend, weil die beiden Nasenauflagen 8 auch eingesetzt werden können, ohne miteinander verbunden zu sein. Diese aus einem weichen Polymer gefertigten Nasenauflagen 8 sind mit einem Träger 9 versehen, der einen über die Nasenauflagen 8 gegen den Fassungsabschnitt 5 vorstehenden Steg 10 mit einer Anlenkachse 11 entlang des Längsrands des Stegs 10 bildet. Im Fassungsabschnitt 5 der Fassungen 2 ist eine Aufnahmenut 12 für den Steg 10 vorgesehen, die einen keilförmigen Querschnitt mit einer Lagerausnehmung 13 für die Anlenkachse 11 im Bereich des Nutengrunds aufweist. Die Abmessungen der Anlenkachsen 11 und der zugehörigen Lageausnehmungen 13 sind so aufeinander abgestimmt, dass die Träger 9 zur Befestigung der Nasenabstützung 6 durch die Aufnahmenut 12 über die Anlenkachsen 11 in radialer Richtung schnappverschlussartig in die Lagerausnehmungen 13 einrasten können.

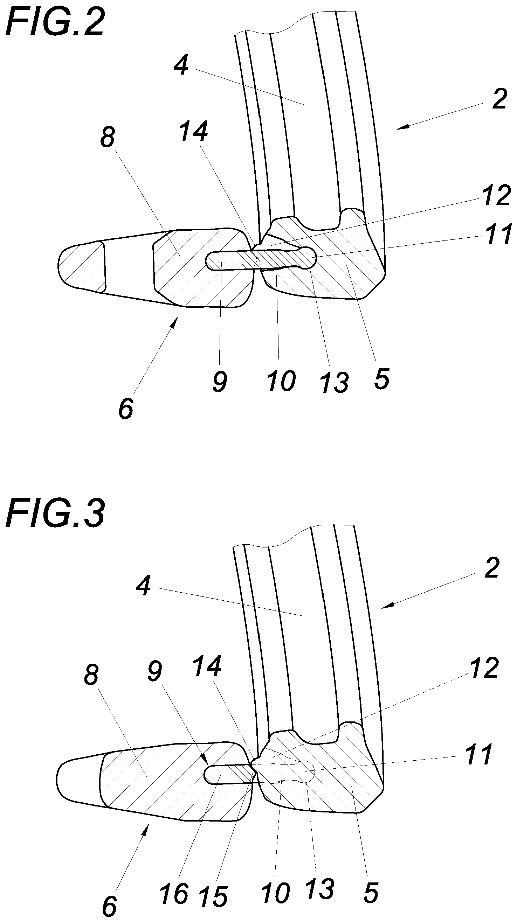

Wie insbesondere der Fig. 3 entnommen werden kann, bilden die Fassungsabschnitte 5 im Anschluss an die Aufnahmenut 12 in Längsrichtung der Aufnahmenut 12 verlaufende Gegenrasten 14 in Form eines Rastwulstes, der mit einer wulstförmigen Rast 15 des Trägers 9 zusammenwirkt, der zu diesem Zweck mit über den Steg 10 seitlich vorstehenden Ansätzen 16 versehen ist. Wie der Fig. 3 entnommen werden kann, kommt die wulstförmige Rast 15 auf den seitlichen Ansätzen 16 der Träger 9 in der einen Raststellung der Nasenauflage 8 auf der einen Seite der Gegenrast 14 zu liegen. Zur Schwenkverstellung der Nasenauflage 8 müssen somit die Rasten 15 über den Rastwulst der Gegenrast 14 hinweg auf die andere Seite der Gegenrast verlagert werden, was eine geringfügige radiale Verlagerung des Stegs 10 und damit der Anlenkachse 11 in Bezug auf die Lagerausnehmung 13 bedeutet. Diese Verlagerungsmöglichkeit ist aufgrund der schnappverschlussartigen Aufnahme der Anlenkachsen 11 in den Lagerausnehmungen 13 in radialer Richtung sichergestellt.

Wie der Zeichnung, insbesondere den Fig. 2 und 3, entnommen werden kann, verlaufen die Anlenkachsen 11 für die Nasenauflagen 8 in der Nähe der der Fassungsnuten 4 und sind daher im Vergleich zum Stand der Technik aus dem Bereich der Nasenflanken gegen den Nasenrücken hin verlagert, wodurch der Anpassungsbereich durch ein Verschwenken der Nasenauflagen 8 vergrößert wird, obwohl der Schwenkwinkel gleichbleibt. Das Vorsehen von lediglich zwei Raststellungen für die Nasenauflagen 8 ist im Allgemeinen für die erforderliche Anpassung an die Nase eines Brillenträgers ausreichend. Wie den Fig. 2 und 3 entnommen werden kann, verlaufen die Träger 9 nicht in einer Mittelebene der Nasenauflagen 8. Dies bedeutet, dass die Nasenauflagen 8 auf den einander zugekehrten und voneinander abgekehrten Seiten die Träger 9 mit unterschiedlicher Dicke überdecken. Die beiden Nasenauflagen 8, die mit dem sie verbindenden Bügel 7 und den Trägern 9 in einer gestreckten Lage, also mit gestrecktem Bügel 7, gespritzt werden, können somit entweder in der in den Fig. 2 und 3 dargestellten Lage, in der die dickere Überdeckung der Träger 9 der Nase zugekehrt ist, aber auch in einer gewendeten Stellung mit der der Nase zugekehrten dünneren Überdeckung eingesetzt werden, womit eine zusätzliche Anpassung an die Nase eines Brillenbenützers ermöglicht wird.

## Patentansprüche

1. Brille mit einer Fassung (2) für Brillengläser (3) und mit einer verstellbaren Nasenabstützung (6), deren beide gegebenenfalls durch einen Bügel (7) miteinander verbundene Nasenauflagen (8) in an einem Fassungsabschnitt (5) vorgesehenen Anlenklagern mithilfe je eines Trägers (9) schwenkverstellbar gehalten sind, der einen aus den Nasenauflagen (8) vorstehenden, in eine Aufnahmeaussparung der Fassungsabschnitte (5) eingreifenden Steg (10) mit einer in Längsrichtung des Fassungsabschnitts (5) verlaufenden Anlenkachse (11) umfasst, die radial in eine Lagerausnehmung (13) am Grund der Aufnahmeaussparung schnappverschlussartig eingreift, wobei die Träger (9) mit einer Rasteinrichtung zur Sicherung ihrer Schwenklage versehen sind, **dadurch gekennzeichnet, dass** die Aufnahmeaussparungen der Fassungsabschnitte (5) als sich im Querschnitt keilförmig verjüngende Aufnahmenuten (12) für den Steg (10) der Träger (9) mit einem die Lagerausnehmung (13) formenden Nutgrund ausgebildet sind und dass die Träger (9) die Aufnahmenut (12) zumindest an einem Ende mit einem Ansatz (16) übergreifen, der mit einer mit wenigstens einer Gegenrast (14) der Fassungsabschnitte (5) zusammenwirkenden Rast (15) als Rasteinrichtung versehen ist.

2. Brille nach Anspruch 1, **dadurch gekennzeichnet, dass** die Gegenrast (14) der Fassungsabschnitte (5) einen in Längsrichtung an die Aufnahmenut (12) anschließenden, in der axialen Mittelebene der Aufnahmenut (12) liegenden Rastwulst bildet.

3. Brille nach Anspruch 1 oder 2, **dadurch gekennzeichnet, dass** die beiden Nasenauflagen (8) ihre Träger (9) auf den einander zugekehrten und voneinander abgekehrten Seiten mit einer unterschiedlichen Dicke überdecken.

## Claims

1. Eyeglasses having a frame (2) for eyeglass lenses (3) and having an adjustable nose support (6), the two nose pads (8) of which, which are optionally connected to one another by a bracket (7), are held so as to be pivotably adjustable each with the aid of a carrier (9) in link bearings provided on a frame section (5), which carrier comprises a web (10), which protrudes from the nose pads (8) and engages into a receiving opening of the frame sections (5) and has a link spindle (11) which extends in the longitudinal direction of the frame section (5) and engages as a snap closure radially into a bearing recess (13) on the base of the receiving opening, wherein the carriers (9) are provided with a catch device to secure the pivot position thereof, **characterised in that** the receiving openings of the frame sections (5) are formed as receiving grooves (12) tapering in a wedge shape in cross section for the web (10) of the carriers (9) having a groove base forming the bearing recess (13), and **in that** the carriers (9) reach beyond the receiving groove (12) at least at one end with a projection (16), which is provided with a catch (15) interacting with at least one counter catch (14) of the frame sections (5) as a catch device.

2. Eyeglasses as claimed in claim 1, **characterised in that** the counter catch (14) of the frame sections (5) forms a catch bead, which adjoins the receiving groove (12) in the longitudinal direction and is located in the axial centre plane of the receiving groove (12).

3. Eyeglasses as claimed in claim 1 or 2, **characterised in that** the two nose pads (8) cover the carriers (9) thereof with different thicknesses on the sides facing toward one another and facing away from one another.

## Revendications

1. Lunettes ayant une monture (2) pour des verres de lunettes (3) et un appui nasal (6) ajustable, dont les deux plaquettes nasales (8) reliées ensemble le cas échéant par un étrier (7) sont maintenues réglables en inclinaison dans des paliers articulés prévus au niveau d'une section de monture (5) à l'aide respectivement d'un support (9), qui comprend une aile (10) faisant saillie des plaquettes nasales (8), en prise dans un évidement de logement de la section de monture (5) avec un axe d'articulation (11), situé dans la direction longitudinale de la section de monture (5), qui est en prise radialement dans un logement de palier (13) à la base de l'évidement de logement par une fermeture à déclic, les supports (9) étant pourvus d'un dispositif d'encliquetage pour bloquer leur position articulée, **caractérisées en ce que** les évidements de logement de la section de monture (5) sont conçus en tant que gorges de logement (12), dont la section transversale se rétrécit en forme de coin, pour l'aile (10) des supports (9) avec un fond de gorge formant le logement de palier (13) et **en ce que** les supports (9) dépassent de la gorge de logement (12) au moins à une extrémité avec un bout (16) qui est pourvu d'une encoche (15) coopérant avec au moins une contre-encoche (14) des sections de monture (5).

2. Lunettes selon la revendication 1, **caractérisées en ce que** la contre-encoche (14) des sections de monture (5) forme un bourrelet d'enclenchement dans le plan médian axial de la gorge de logement (12), raccordé dans la direction longitudinale au niveau de la gorge de logement (12).

3. Lunettes selon la revendication 1 ou 2, **caractérisées en ce que** les deux appuis nasaux (8) couvrent leurs supports (9) sur les côtés tournés l'un vers l'autre et opposés l'un à l'autre, avec une épaisseur différente.
